# EUROPÄISCHE PATENTSCHRIFT

(11) **EP 3 036 031 B1**
(45) Veröffentlichungstag und Bekanntmachung des Hinweises auf die Patenterteilung: **07.11.2018**
(21) Anmeldenummer: 14752648.7
(22) Anmeldetag: 19.08.2014
(51) Int. Cl.: B01F 17/42, C09K 5/06

(54) **PARAFFIN-IN-WASSER-DISPERSION MIT VERRINGERTEM UNTERKÜHLUNGSEFFEKT SOWIE VERFAHREN ZU DEREN HERSTELLUNG**
PARAFFIN-IN-WATER DISPERSION WITH REDUCED SUPERCOOLING EFFECT AND METHOD FOR PRODUCTION THEREOF
DISPERSION DE PARAFFINE DANS L'EAU À EFFET DE SUR-REFROIDISSEMENT RÉDUIT AINSI QUE PROCÉDÉ POUR LA PRÉPARER

(30) Priorität: 21.08.2013 DE 102013109054
(43) Veröffentlichungstag der Anmeldung: 29.06.2016
(73) Patentinhaber: Fraunhofer-Gesellschaft zur Förderung der angewandten Forschung e.V., 80686 München (DE); Ruhr-Universität Bochum, 44801 Bochum (DE)
(72) Erfinder: POLLERBERG, Clemens, 45699 Herten (DE); DÖTSCH, Christian, 46045 Oberhausen (DE); KAPPELS, Tobias, 44789 Bochum (DE); HANU, Lucian George, 44801 Bochum (DE)
(86) Internationale Anmeldenummer: PCT/EP2014/067666
(87) Internationale Veröffentlichungsnummer: WO 2015/024939

(56) Entgegenhaltungen:
- EP-A2- 2 127 737
- JP-A- H07 126 614
- JP-A- 2006 045 391
- US-A1- 2004 046 147

## Beschreibung

Derzeit wird in Versorgungsnetzen für Wärme und Kälte Wasser als Wärmeträger und Speichermedium eingesetzt. In diesen Versorgungsnetzen erfolgen der Wärmetransport und die Wärmespeicherung ausschließlich als sensible Wärme über eine Temperaturspreizung, wobei die erzielbare Transportkapazität des Netzes direkt proportional zur Wärmekapazität des Wärmeträgers ist.

Seit einigen Jahren werden Wärmeträger diskutiert, die in Analogie zu latenten Wärmespeichersystemen (als Wärmeträger und Speichermedium für Wärme- und Kälteversorgungssysteme) die latente Wärme eines Phasenwechsels nutzen und so eine höhere Energiedichte gegenüber den konventionellen Medien Wasser oder Sole aufweisen. Dabei müssen diese Fluide auch nach einem Phasenwechsel weiterhin pumpfähig bleiben. Die Fluide bestehen aus einem phasenwechselnden Material, dem sogenannten Phase Change Material (PCM), und einer kontinuierlich flüssigen Phase. Das PCM wird in der kontinuierlichen Phase dispergiert und kann so auch in festem Zustand als "Schlamm", den sogenannten Slurry, gefördert werden. Dementsprechend werden diese Fluide auch Phase Change Slurry (PCS) genannt. Derzeit werden zwei Stoffsysteme als PCS vorgeschlagen: Paraffin-in-Wasser-Dispersionen und Clathrate-Hydrat Slurries (CHS). Bei diesen Stoffsystemen werden Paraffine bzw. Salze als PCM verwendet. So wurde bereits ein CHS auf Basis von Tetra-n-Butylammonium-bromid (TBAB) als Kälteträger beschrieben. Allerdings ist TBAB ein Gefahrstoff, toxisch und besitzt eine hohe Wassergefährdungsklasse, so dass dessen Einsatz hinsichtlich der Sicherheitstechnik technisch aufwendiger sein dürfte als beispielsweise ein Einsatz von Wasser oder Paraffin-in-Wasser Dispersionen.

Paraffin-in-Wasser Dispersionen eignen sich dem Grunde nach für den Ersatz von Wasser als Wärmeträger und Speichermedium für Wärme- und Kälteversorgungssysteme, weil sie eine deutlich höhere Energiedichte besitzen. Die höhere Energiedichte der Dispersion basiert auf dem Phasenwechsel des Paraffins in einem vorgegeben Temperaturbereich. Im Gegensatz zu Wasser kann mit der Dispersion nicht nur die sensible Wärme über eine Temperaturspreizung, sondern auch die latente Wärme während des Phasenwechsels genutzt werden. Entsprechend der Anwendung kann der gewünschte Temperaturbereich des Phasenwechsels durch Auswahl des Paraffins oder Mischung mehrere Paraffinsorten angepasst werden.

Es sind zwei grundlegende Formen von Paraffin-in-Wasser Dispersionen bekannt.

Bei der ersten Form handelt es sich um mikroverkapseltes Paraffin, das mit Wasser gemischt als Suspension vorliegt. Dabei ist das Paraffin in eine Kunststoffhülle verkapselt. Mit Hilfe dieser Kunststoffkapsel wird sichergestellt, dass das Paraffin in Form von "Partikeln" in der kontinuierlichen Phase homogen verteilt vorliegt. Suspensionen mit verkapselten Paraffinen sind in einer Reihe von Publikationen beschrieben, darunter von H. Inaba et al. in "Thermophysical properties of microcapsulate pcm slurry with the latent heat capability", Thermophysical Properties 25. Proceedings of the 25th Japan Symposium on Thermophysical Properties. Nagano, October 20-22 (2004) (Verkapselung mit Melaminharz), von S. Gschwander et al. in "Micro-encapsulated paraffin in phase-change slurries", Solar Energy Materials and Solar Cells 89 (2-3), S. 307-315 (2005) (Verkapselung mit Polymethylmethacrylat, PMMA) und von R. Yang et al. in "Preparation, physical property and thermal physical property of phase change microcapsule slurry and phase change emulsion", Solar Energy Materials and Solar Cells 80 (4), S. 405-416 (2003) (Verkapselung mit PMMA oder Polymethylmethacrylat).

Allerdings können bei extremen Strömungsverhältnissen, wie von S. Gschwander et al. a.a.O. dokumentiert, die Kapseln beschädigt werden, so dass das Paraffin aus den Kapseln austreten kann. Eine homogene Verteilung der Paraffinpartikel in der Dispersion ist dann nicht mehr gegeben.

Bei der zweiten, alternativen Form handelt es sich um Emulsionen bzw. Suspensionen, die mit Hilfe von Tensiden stabilisiert sind. Bei diesen Fluiden wird das Paraffin in Wasser dispergiert, und mit Hilfe von grenzflächenaktiven Substanzen wird ein "Entmischen" vermieden. Das Paraffin liegt als Tröpfchen mit einem Durchmesser von in der Regel 1 bis 20 µm homogen verteilt in der kontinuierlichen Phase vor. Allerdings weisen die bislang vorgeschlagenen Tensid-Dispersionen zwei wesentliche Nachteile hinsichtlich des späteren, technischen Einsatzes auf: sie besitzen keine dauerhafte Stabilität über einen längeren Einsatzzeitraum und zeigen einen teilweisen sehr hohen Unterkühlungseffekt.

Es ist wesentlich, dass die Dispersionen sowohl im Ruhezustand als auch beim Fließen und unter der Einwirkung von Scherkräften stabil bleiben. Jedoch wurden bislang je nach Einsatzdauer und Beanspruchung Veränderungen bei der Partikelgrößenverteilung festgestellt. Insbesondere die Zunahme der Partikeldurchmesser weist auf eine Instabilität der Dispersion hin. In schlimmsten Fall kommt es dann zur Aufspaltung der Dispersion in ihre Komponenten. Das Aufspalten der Dispersion wird insbesondere dann beobachtet, wenn die Dispersion in gefrorenem Zustand Scherkräften ausgesetzt wird, wie beispielweise beim Durchströmen von Pumpen und Armaturen. Für die Beurteilung der Langzeitstabilität der Dispersion kann als Indiz auch das sogenannte Aufrahmen der Paraffinpartikel aufgrund des Dichteunterschiedes zwischen Paraffin und Wasser herangezogen werden, wobei ein Aufrahmen noch kein notwendiges Kriterium für eine Langzeitinstabilität darstellt, solange die Tröpfchen der Dispersion nicht koaleszieren. Unter "Aufrahmen" versteht man dabei das Aufschwimmen der Paraffintröpfchen in Richtung der Oberfläche der Dispersion, ohne dass diese ihren Durchmesser verändern.

Um dies zu vermeiden, werden diverse Verdickungsmittel in der Literatur genannt, mit denen der Dichteunterschied kompensiert werden soll. Die Angaben zur Konzentration schwanken mit dem vorgeschlagenen Verdickungsmittel. L. Huang et al. schlagen in EP 2 127 737A2 ein Thixotropierungsmittel vor, das sich ausschließlich in der kontinuierlichen (wässrigen) Phase aufhält und vorzugsweise ausgewählt ist unter hoch disperser Kieselsäure sowie Polysacchariden wie Xanthan.

Außerdem ist es wie bereits oben erwähnt günstig, oberflächenaktive Substanzen als Dispersionshilfen zuzusetzen, um das Aufspalten der Dispersion zu vermeiden. Schon 1993 schlugen Inaba et al. in "Fundamental Study of Cold Heat Storage System of O/W-Type Emulsion Having Cold Latent Heat Dispersion Material: 1st Report, Estimation of Thermophysical properties", Transactions of the Japan Society of Mechanical Engineers. B 59 (565), S. 2882-2889 hierfür vor, das nichtionische Tensid Polyethylenglycolstearylether und das anionische Tensid Alkylbenzolsulfat in Kombination zu verwenden. Auch Triton X-100, ein Polyethylenglycolphenylether, Span 60, ein Sorbitanfettsäureester, und Tween 60, ein Polyoxyethylensorbitanmonestearat, zählen zu den konkret erwähnten Materialien. L. Huang et al. schlagen in EP 2 127 737 A2 vor, ein oder mehrere Tenside zu wählen, das/die vor dem Emulgieren der Komponenten im Paraffin gelöst werden, dabei aber einen relativ hohen HLB-Wert (bevorzugt von mindestens 12) aufweisen, also relativ hydrophil sind. Als geeignet werden u.a. Fettalkoholpolyglycolether und -alkoxylate, Alkylpolyglucoside, Alkylphenolethoxylate, Cetylstearylalkohole, Natriumcetylstearylsulfat und dergleichen genannt. Matsuda und leuji schlagen in US 2004/0046147 A1 hierfür nichtionische oberflächenaktive Substanzen wie Polyoxyalkylensorbitanalkylester und Sorbitanalkylester, Saccharosefettsäureester, Polyoxyethylenalkylether und -ester, Polyoxyethylenalkylphenolether, Polyglycerinalkylester, Fettsäureester, Fettsäure-Seifen, Alkylamin-Ethylenoxid-Addukte und Sterole wie Cholesterin als wesentliche Komponenten vor, die allein oder in Kombination eingesetzt werden sollen. Besonders zu bevorzugen sei ein Polyoxyethylenalkylether wie ein Polyoxyethylenstearylether mit mindestens 20 Ethylenoxideinheiten als wesentliche Komponente. Hinzutreten können amphotere, anionische, nichtionisch-anionische und kationische oberflächenaktive Mittel; genannt werden verschiedene organische Sulfate und Sulfonsäuren sowie deren Salze, die nur teilweise langkettig sein müssen, Ethercarbonsäuren und deren Salze, Betaine wie Laurylamidopropylbetain und quartäre Ammoniumsalze wie Dialkylammoniumchlorid. Bevorzugt seien aber "Polymer-Dispersionsmittel", worunter die Erfinder klassische, wasserlösliche oder wassernetzende Verdickungsmittel wie Polyvinylpyrrolidon, Polyvinalalkohol, Natriumpolyacrylat oder Hydroxypropylcellulose verstehen. Das oberflächenaktive Mittel der Druckschrift soll mindestens eine Species aufweisen, die einen HLB-Wert von höchstens 12, vorzugsweise unter 9 oder sogar 3 besitzt, sowie eine weitere Species, die einen HLB-Wert von mindestens 12 besitzt. Mit anderen Worten: eine der vorhandenen oberflächenaktiven Substanzen soll überwiegend hydrophob sein, während die andere überwiegend hydrophil sein soll. In den Beispielen wurden ausschließlich die nichtionischen Tenside Polyethylenoxid-stearylether bzw. -sorbitanmonostearat mit mindestens 20 Polyethylenoxid-Einheiten in Gegenwart entweder nur eines ebenfalls oberflächenaktiven Keimbildners (siehe unten) sowie häufig zusätzlich einer der als "Polymer-Dispersionsmittel" angesprochenen Verbindungen qualitativ auf ihre Wirksamkeit untersucht und als solchen Kombinationen überlegen dargestellt, in denen das nichtionische Tensid eine kürzere Polyethylenoxid-Kette enthielt. Dabei handelt es sich bei den "Polymer-Dispersionsmitteln" um klassische Verdickungsmittel; ob diese tatsächlich eine Dispersionswirkung haben, muss dahinstehen. JP 2006045391 offenbart Paraffin-in-Wasser-Emulsion als latente Wärmespeichersysteme, welche durch anionischen Tenside, enthaltend Polybutenylsuccinat und Polyoxyalkylenalkyletherphosphat stabilisiert werden. Als Unterkühlungseffekt bezeichnet man das Gefrieren des PCM in der Dispersion bei einer Temperatur, die deutlich unter der Schmelztemperatur des PCM liegt. Der Phasenwechsel von flüssig zu fest findet somit nicht auf dem gleichen Temperaturniveau statt wie von fest zu flüssig. Dies ist für die technische Anwendung eines PCS nachteilig, so dass der Unterkühlungseffekt möglichst reduziert werden muss. Der Unterkühlungseffekt lässt sich bei den derzeit vorgeschlagenen Stoffsystemen mit Hilfe von Additiven teilweise unterdrücken. Matsuda und leuji schlagen in US 2004/0046147 A1 vor, hierfür ein Keimbildungsmittel einzusetzen. Dieses sollte einerseits einen höheren Schmelzpunkt aufweisen als das Paraffin und sich daher beim Abkühlen früher verfestigen. Dabei soll der Schmelz- bzw.
Phasenumwandlungspunkt des Keimbildners als solcher zwischen 10°C und 100°C und außerdem 10 bis 100 K über dem des Paraffins liegen. Als geeignet vorgeschlagen werden neben gesättigten Kohlenwasserstoffen Fettsäuren, höhere Alkohole, Sorbitanfettsäureester und Polyoxyethylensorbitanester wie die Tristearate, Saccharosefettsäureester und Glycerinfettsäureester wie Tristearin sowie Fettsäureamide, also nichtionische Substanzen, die gleichzeitig oberflächenaktiv sind und einen relativ niedrigen Schmelzpunkt besitzen. In den Beispielen eingesetzt wurde vor allem Saccharosefettsäureester und Sorbitantristearat. Die in EP 2 127 737 A2 vorgeschlagenen Keimbildner sind dagegen Alkane oder Alkene, die einen Schmelzpunkt von mindestens 20 K über dem Schmelzpunkt des als innere Phase eingesetzten Paraffins aufweisen und dementsprechend eine längere Kohlenstoffkette als diese besitzen. Diese werden der inneren Phase zugesetzt.
Zusammenfassend lässt sich sagen, dass US 2004/0046147 konkret die Verwendung von zwei nichtionischen Tensiden vorschlägt, von denen eines als Dispersionsmittel und eines als Keimbildner eingesetzt werden soll, wobei der Zusatz eines polymeren, dispersiv wirkenden Verdickungsmittels möglich ist. Dabei ist darauf zu achten, dass der hydrophile Anteil des Dispersionsmittels (in Gestalt einer Polyethylenoxidkette) ausreichend groß ist. Gemäß der Lehre der EP 2 127 737 A2 wird mindestens ein Tensid zugesetzt, das einen relativ hohen HLB-Wert (12 oder größer) aufweisen sollte; als Keimbildner wird ein Paraffin zugesetzt, und die Mischung muss notwendigerweise ein Verdickungsmittel enthalten.

Weiterhin sind zur Vermeidung des Unterkühlungseffekts im Stand der Technik auch Additive wie anorganische Nanopartikel und Metallpartikel vorgeschlagen worden.

Wenn der Keimbildner der inneren Phase zugesetzt wird, besteht die Gefahr, dass im Verlaufe einer Vielzahl von Phasenwechsel-Zyklen sowie aufgrund von Scherbeanspruchungen des Fluids, die sich beim Pumpen nicht vermeiden lassen, der Keimbildner zumindest teilweise aus den Paraffintröpfchen austritt und damit seine Wirkung verliert. In L. Huang et al., "Low temperature paraffin phase change emulsions", International Journal of Refrigeration 33(8), S. 1583-1115189 (2010) wird dies für längerkettige Paraffine als Keimbildner vermutet, weil bei Tests der Suspensionen unter mechanisch-thermischer Belastung der Gefrierpunkt des Paraffins nach einiger Zeit auf Werte abfiel, die dem Gefrierpunkt ohne Zusatz des Keimbildners entsprachen.

Werden allerdings nichtionische Tenside wie Saccharosefettsäureester oder Sorbitanfettsäureester als Keimbildner eingesetzt, so lässt sich der unerwünschte Unterkühlungseffekt nicht in dem Maße beseitigen, wie es für kommerzielle Suspensionen erforderlich wäre, was im Folgenden genauer ausgeführt wird.

Der Erfindung liegt demnach die Aufgabe zugrunde, eine Paraffin-in-Wasser-Dispersion bereitzustellen, die einerseits sowohl beim Stehen als auch unter "Stress", d.h. beispielsweise unter Scherbedingungen, stabil bleibt und andererseits einen sehr geringen Unterkühlungseffekt zeigt.

In Lösung der Aufgabe ist es den Erfindern gelungen, eine Paraffin-in-Wasser-Dispersion bereitzustellen, umfassend
- Wasser,
- einen langkettigen Kohlenwasserstoff, insbesondere ein Alkan, oder ein Gemisch aus mehreren solchen Kohlenwasserstoffen/Alkanen,
- ein erstes Tensid, das einen hydrophilen Rest mit einer Kettenlänge von mindestens 40 Atomen aufweist und dessen HLB Wert vorzugsweise mindestens 8 beträgt,
- ein zweites Tensid, das einen hydrophilen Rest mit einer Kettenlänge von höchstens 20 Atomen aufweist, wobei
- jedes der in der Dispersion vorhandenen Tenside eine langkettige hydrophobe Gruppe mit mindestens 14 Kohlenstoffatomen, günstiger mindestens 16 Kohlenstoffatomen in der Kette, vorzugsweise eine Alkylgruppe und ganz besonders bevorzugt eine Stearylgruppe, aufweist, mit denen es in den Paraffintröpfchen verankert ist, und wobei
- mindestens eines der Tenside ein nichtionisches Tensid ist und
- mindestens eines der Tenside ein anionisches Tensid ist, das mindestens eine Carboxylatgruppe trägt und vorzugsweise einen HLB-Wert von größer 8 besitzt.

Unter "HLB-Wert" ist der Wert der sogenannten hydrophobic-lipophilic balance zu verstehen, der für nichtionische Tenside nach der Formel von Griffin (HLB = 20 x (1-Mₗ/M) mit Mₗ= Molekulargewicht des lipophilen Anteils und M = Molekulargewicht des Gesamtmoleküls), für Fettsäureester mehrwertiger Alkohole nach der Formel HLB = 20 x (1-VZ/SZ) mit VZ = Verseifungszahl des Esters und SZ = Säurezahl der abgetrennten Säure und für kationische und anionische Tenside nach der Methode von Davies (HLB = 7 + m x Hₕ - n x Hₗ mit m = Anzahl hydrophiler Gruppen im Molekül, Hₕ = Wert der hydrophilen Gruppe, n = Anzahl lipophiler Gruppen im Molekül und Hₗ = Wert der lipophilen Gruppe) berechnet wird.

Die vorliegende Erfindung beruht auf mehreren Erkenntnissen.

Die erste Erkenntnis betrifft die Tatsache, dass anionische Tenside mit mindestens einer Carboxylatgruppe in den Paraffin-in-Wasser-Mischungen der vorliegenden Erfindung neben ihrer oberflächenaktiven, emulgierenden Wirkung vor allem auch als Keimbildner fungieren. Diese Tenside sind erfindungsgemäß geeignet, weil sie aufgrund ihrer hohen Löslichkeit in der kontinuierlichen, wässrigen Phase nicht ausfallen können. Um dem Unterkühlungseffekt entgegenzuwirken, sollte außerdem der Schmelzpunkt des mindestens einen erfindungsgemäß einsetzbaren anionischen Tensids vorzugsweise mindestens 20 K über dem des eingesetzten langkettigen Kohlenwasserstoffs bzw. Kohlenwasserstoffgemischs liegen. Diese Tenside können an ihrem hydrophilen "Kopf" weitere hydrophile, neutrale oder anionische Gruppen tragen wie Aminogruppen, Hydroxygruppen, Thiogruppen oder Carboxylatgruppen. Geeignete anionische Tenside umfassen die Monosalze von Dicarbonsäure-monofettestern, beispielsweise die Natrium-, Kalium- oder Calciumsalze, die Salze von mit Fettsäuren veresterten Hydroxycarbonsäuren, sowie die (Mono-)Salze von Fettsäureamiden, deren Amino-Komponente eine Aminosäure mit ein oder zwei Säuregruppen oder mit einer Säure- und einer zweiten Aminogruppe oder mit einer Säure- und einer Hydroxygruppe ist. Ein Beispiel ist Natriumstearoyllactat mit einem Schmelzpunkt von 49°C. Bevorzugt sind dabei Tenside, die trotz ihres kurzen hydrophilen "Kopfs" einen hohen HLB-Wert von vorzugsweise >10 und stärker bevorzugt > 14 besitzen.

In einer besonders bevorzugten Ausführungsform enthält das anionische Tensid weiterhin eine freie Carbonsäuregruppe. Auch sind anionische Tenside mit einem Schmelzpunkt von über 100°C und insbesondere von mindestens 150°C und/oder einem HLB-Wert von >18 oder sogar ≥ 20 besonders bevorzugt. Ein Beispiel, das allen drei Kriterien genügt, ist Natriumstearoylglutamat mit einem Schmelzpunkt von über 200°C und einem HLB-Wert von >20; Der Einsatz eines anionischen und damit auch bei kurzer hydrophiler Kette stark hydrophilen Tensids als Keimbildner reduziert darüber hinaus den Unterkühlungseffekt auch bei einer Vielzahl von Phasenwechseln und unter Belastung (Stress, Scherung der Suspension) deutlich. Der Vorteil des Einsatzes dieses Tensides gegenüber anderen Stoffen, die als Keimbildner vorgeschlagen worden sind und keine Tensid-Eigenschaften aufweisen wie Paraffine, liegt darin, dass sich das Tensid auch bei wiederholtem Phasenwechsel immer an der Grenzfläche zwischen dem Paraffinpartikel und der kontinuierlichen Phase anordnet. Eine Verteilung des Keimbildners in der kontinuierlichen Phase und damit eine nachlassende Wirkung oder sogar eine negative Beeinflussung der Stabilität kann ausgeschlossen werden.

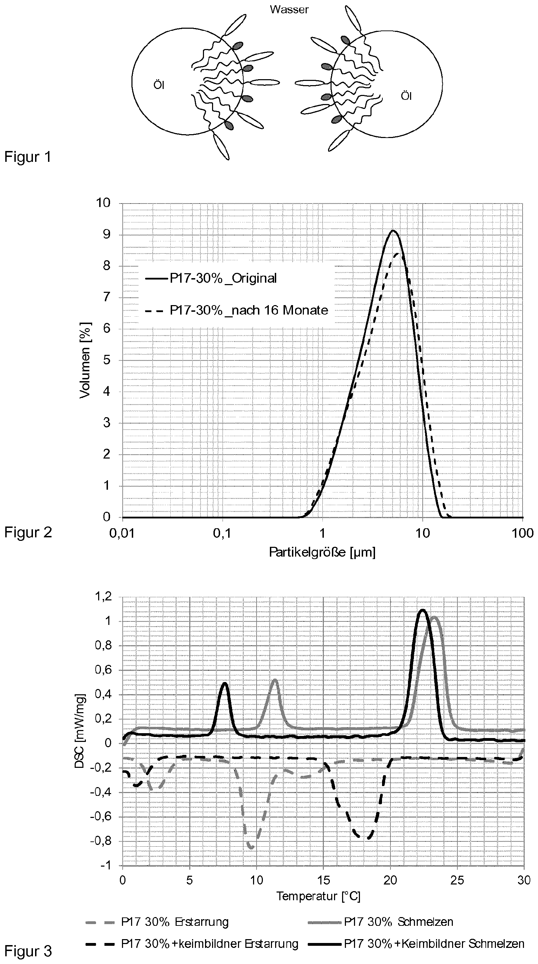

Die Erfindung beruht weiterhin auf der Erkenntnis, dass mit dem Einsatz von mindestens zwei Tensiden, von denen eines einen langkettigen hydrophilen Rest oder "Kopf" mit vorzugsweise einer Kettenlänge von mindestens 40 Atomen, stärker bevorzugt von mindestens 60 Atomen und besonders bevorzugt mindestens 80 Atomen besitzt (wobei sowohl Kohlenstoffatome als auch andere Atome der Kette wie Sauerstoffatome gezählt werden), während das andere einen hydrophilen "Kopf" mit einer Kettenlänge von höchstens 20, vorzugsweise höchstens 10 Atomen aufweist, ein dicht gepackter "Tensid-Film" auf der Oberfläche des Paraffinpartikels erzielt wird. Schematisch ist dieser "Tensid-Film" in **Figur 1** dargestellt. Die Tenside sind so ausgewählt, dass die aufgrund der Kugelform des Partikels sich ergebenden Zwischenräume zwischen den Molekülen des langkettigen Tensids durch das zweite Tensid, dessen Molekülende in der wässrigen Phase deutlich kleiner ist, aufgefüllt werden. Das führt zu einer besseren Oberflächenbesetzung der Paraffintropfen mit dem Tensid und infolgedessen zu einer verbesserten Stabilität. Aufgrund der jeweils mindestens 14 Kohlenstoffatome langen hydrophoben Kette wird eine festere Verankerung aller Tenside in beiden Phasen (Wasser und Paraffin) erreicht. Die Beweglichkeit der Moleküle an der Oberfläche wird durch die lateralen Wechselwirkungen erniedrigt. Gleichzeitig trägt das kurzkettige Tensid durch Anhebung der Viskosität zur Stabilisierung der Dispersion bei.

Da die beiden vorgenannten Effekte unabhängig voneinander sind, kann entweder das Tensid mit der langen hydrophilen Kette oder das Tensid mit der kurzen hydrophilen Kette die Carboxylatgruppe tragen, während das jeweils andere Tensid ein nichtionisches Tensid ist. In einer bevorzugten Ausführungsform ist das Tensid mit der langen hydrophilen Kette ein nichtionisches Tensid, während das Tensid mit der kurzen hydrophilen Kette die Carboxylatgruppe trägt.

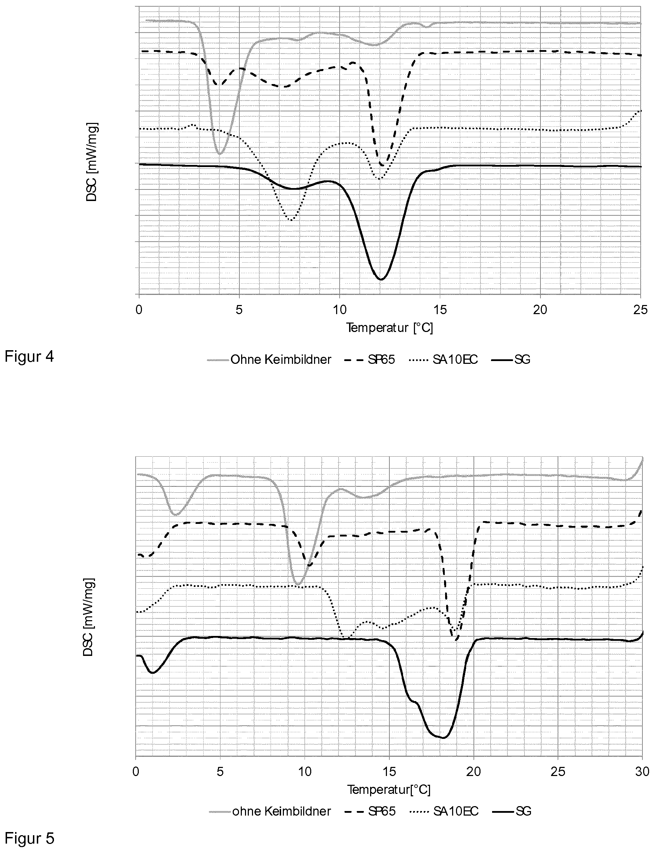

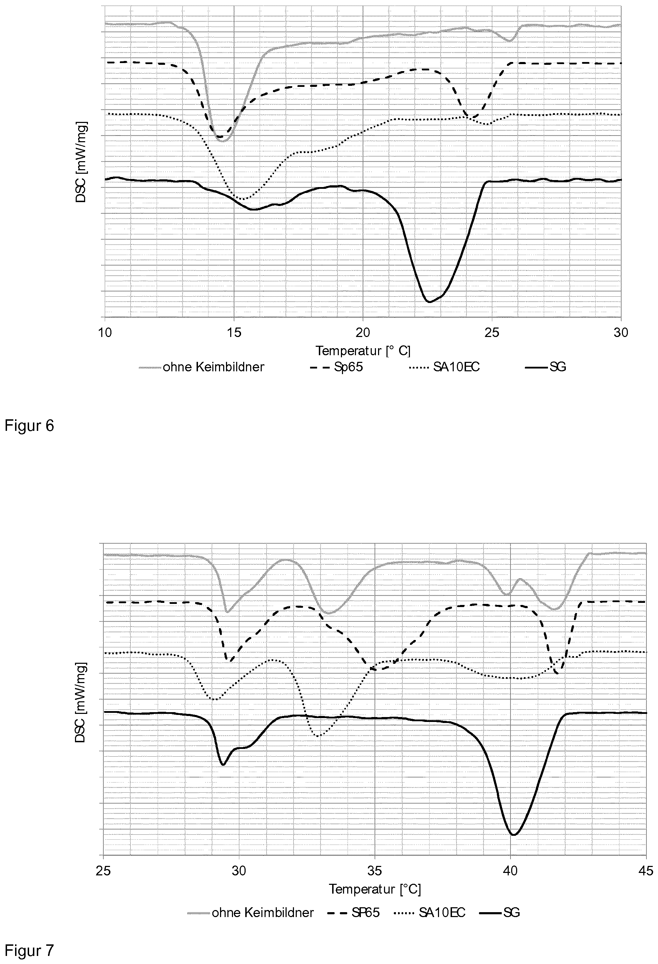

Die Erfinder konnten feststellen, dass der Einsatz eines anionischen Tensids, das eine Carboxylatgruppe trägt, den Unterkühlungseffekt in Paraffin-in-Wasser-Mischungen stark verringert. Dies konnte durch differentialkalorimetrische Untersuchungen anhand einer Dispersion von 30 Gew.-% eines Heptadecans in Wasser gezeigt werden, siehe **Figur 3**. Der Unterkühlungsgrad der Probe, der ohne Keimbildner bei 10 K liegt, wurde bis auf 4 K reduziert. Der Effekt ist deutlich stärker als bei Einsatz der in US 2004//0046147 A1 vorgeschlagenen Tenside. Dies konnte anhand von differentialkalorimetrischen Untersuchungen gezeigt werden, bei denen Paraffin-in-Wasser-Mischungen mit jeweils identischem anionischem Tensid zum einen ohne Keimbildner, dann mit den in den Beispielen von US 2004//0046147 A1 verwendeten Keimbildern Sorbitantristearat (Span 65) und Saccharosefettsäureester (Sisterna A10E-C) und schließlich mit Natrium-stearoylglutamat in jeweils identischen Anteilen (0,5 Gew.-% des Gewichts der gesamten Dispersion) zum Einsatz kamen. Die Figuren 4 bis 7 zeigen die Ergebnisse mit vier verschiedenen Paraffinen, nämlich dem Hexadecan Parafol 16, einem Heptadecan, dem Octadecan Parafol 17 sowie dem Docosan Parafol 22.

In manchen Ausführungsformen der Erfindung enthält die Paraffin-in-Wasser-Mischung der Erfindung ein drittes Tensid. Dieses dritte Tensid wird ausgewählt unter nichtionischen Tensiden, die stark hydrophile Gruppen aufweisen, ausgewählt unter Aminogruppen, Thiogruppen und Hydroxygruppen. Es kann sich dabei auch um eine Mischung dieser Tenside handeln. Der Kopf dieses Tensids ist relativ kurz; es handelt sich also dabei um ein Tensid mit einem recht geringen HLB-Wert, z.B. mit einem HLB-Wert von < 6. Dieses Tensid unterstützt die Stabilität der Mischung, da sein hydrophiler "Kopf" zusammen mit dem des anderen kurzkettigen Tensids Platz zwischen den langen hydrophilen Ketten des anderen Tensids findet und die Paraffin-Tröpfchen damit stabil in ihrer wässrigen Umgebung einbettet. Diese Ausführungsformen sind vor allem dann bevorzugt, wenn es sich bei dem für die Keimbildung zuständigen Tensid um dasjenige mit einem nur kurzen hydrophilen Kopf (hydrophile Kettenlänge von weniger als 20 Atome, vorzugsweise unter 10 Atome) handelt, weil sie es möglich macht, die konkrete Struktur und/oder die Menge des anionischen, carboxylatgruppenhaltigen Tensids, das als Keimbildner fungiert, allein in Hinblick auf die Erstarrungspunkt-Erhöhung zu wählen, ohne Rücksicht auf dessen oberflächenaktive Wirkung nehmen zu müssen.

Die Stabilität der Dispersion wird anhand der Partikelgrößenverteilung bewertet. Ändert sich die Partikelgrößenverteilung der Dispersion nicht bzw. nur unwesentlich, gilt dies - für diesen Zeitraum und unter den gewählten Bedingungen - als stabil. Die Partikelgrößenverteilung einer erfindungsgemäßen Dispersion eines Heptadecan-Paraffins (30 Gew.-% in Wasser) mit drei Tensiden vor und nach einer Lagerungsphase von sechzehn Monaten ist in Figur 1 aufgetragen. Die Partikelgrößenverteilung ist annährend gleich, und es ist keine signifikante Änderung festzustellen. Aufgrund von entsprechenden Lagerungsversuchen mit unterschiedlichen Mengen und Anteilen an Tensiden werden deren Mengen in der Paraffin-in-Wasser-Dispersion erfindungsgemäß bevorzugt wie folgt gewählt:
Die Menge des einzigen Tensids mit dem langkettigen hydrophilen Kopf oder die Gesamtmenge aller Tenside mit dem langkettigen hydrophilen Kopf sollte ca. 0,5 bis 10 Gew.-% der Dispersion betragen; bevorzugt sind 0,8 bis 5 Gew.-%.

Die Menge des einzigen Tensids mit dem kurzen hydrophilen Kopf oder die Gesamtmenge aller Tenside mit dem kurzkettigen hydrophilen Kopf sollte ca. 0,25 bis 5 Gew.-% der Dispersion betragen, bevorzugt sind 0,4 bis 2,5 Gew.-%.

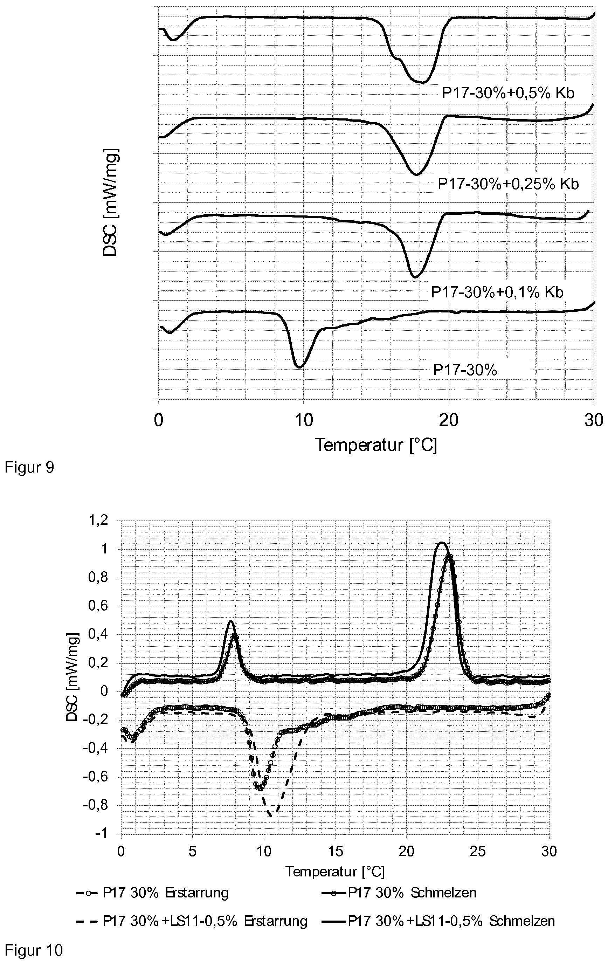

In Bezug auf die Menge des anionischen, eine Carboxylatgruppe aufweisenden Tensids konnten die Erfinder feststellen, dass das Optimum dieser Menge in Abhängigkeit von seiner chemischen Zusammensetzung sowie dem jeweils gewählten Paraffin und dem Vorhandensein der weiteren Tenside schwankt. Dabei wurde festgestellt, dass der Effekt der Erstarrungspunkt-Erhöhung mit steigenden Anteilen dieses Tensids bis zum einem Maximum steigt; wird die Konzentration des Tensids über dieses Maximum hinaus erhöht, kann man keine weitere signifikante Änderung feststellen. Dies wird in Figur 9 anhand einer erfindungsgemäßen Dispersion aus 30 Gew.-% Heptadekan in Wasser mit zwei Tensiden gezeigt. Als anionisches Tensid wurde Natriumstearoylglutamat gewählt. Das Maximum lag in dieser Konstellation bei ca. 0,25 Gew.-% Keimbildner. Insgesamt haben die Erfinder festgestellt, dass der Anteil dieses Tensids ca. 0,1 bis 2,0 Gew.-% der Dispersion betragen sollte; bevorzugt sind 0,15 bis 0,5 Gew.-%. Je nachdem, ob dieses Tensid der Gruppe mit langem hydrophilem Kopf oder derjenigen mit kurzem hydrophilem Kopf zuzuordnen ist, kann dieses Tensid entweder als alleiniges Tensid mit langer hydrophiler Kette oder als alleiniges Tensid mit kurzer hydrophiler Kette oder aber jeweils im Gemisch mit einem weiteren Tensid vergleichbarer Kettenlänge eingesetzt werden. Im letzten Fall gelten die obigen Mengenangaben für das Tensid mit dem langkettigen und das mit dem kurzkettigen hydrophilen Kopf für die Summe der diese Eigenschaft aufweisenden Tenside. Das Gleiche gilt, wenn mehrere anionische, eine Carboxylatgruppe aufweisenden Tenside eingesetzt werden.

Auch das Aufrahmen von Paraffinpartikel ist bei der erfindungsgemäßen Dispersion stark vermindert. Die Erfinder haben feststellen können, dass der erfindungsgemäße Zusatz eines anionischen Tensids mit Carboxylatgruppen nicht nur dem Unterkühlungseffekt entgegenwirkt, sondern auch stabilisierend wirkt; beide Effekte sind den entsprechenden Effekten der in US 2004/0046147 A1 untersuchten Keimbildnern überlegen.

Der Anteil des Paraffins in der Paraffin-in-Wasser-Emulsion liegt bezogen auf die Summe aus Paraffin und Wasser in der Regel zwischen 5 und 55 Gew.-%; der Anteil an Wasser dementsprechend zwischen 95 und 45 Gew.-%. Bevorzugt liegt der Anteil des Paraffins bei etwa 15 bis 45 Gew.-% und noch stärker bevorzugt bei etwa 25 bis 35 Gew.-%.

Bezogen auf die Gesamtmenge der Bestandteile liegt der Anteil des Paraffins in der Regel zwischen 15 und 60 Gew.-%, vorzugsweise zwischen 25 und 45 Gew-%.

Als Paraffin wird vorzugsweise ein langkettiger Kohlenwasserstoff gewählt, ausgewählt unter reinen Paraffinen (meist Alkanen mit einer Kettenlänge zwischen 14 und 25 Kohlenstoffatomen, insbesondere 16 und 22 Kohlenstoffatomen), Mischungen aus diesen Paraffinen sowie Wachsen und Mischungen aus Wachsen und den genannten Paraffinen. Das konkrete Material wird dabei in der Regel anhand des gewünschten rheologischen Verhaltens der Paraffin-in-Wasser-Dispersion gewählt. So werden für Wärmeträgermedien solche Materialien gewählt, die einen Schmelzpunkt bei oder unterhalb der üblichen Anwendungstemperatur aufweisen, z.B. einen Schmelzpunkt von 10°C oder darunter für typische Kälteanwendungen (6-12°C).

Die erfindungsgemäße Dispersion kann ausschließlich aus den genannten Komponenten bestehen. Der Anteil des Wassers, bezogen auf die Gesamtmenge der Bestandteile, errechnet sich dann durch die Differenz der Summe aus den prozentualen Anteilen der Tenside und des Paraffins zu 100%. Dabei ergibt sich in der Regel ein Anteil von 35 bis 83 Gew.-%.

Alternativ kann die erfindungsgemäße Dispersion weitere Zusätze enthalten. Hierbei handelt es sich je nach Anwendungszweck vorzugsweise um Frostschutzmittel, Biozide, Konservierungsmittel und/oder Korrosionsschutzmittel. Die genaue Dosierung richtet sich dabei jeweils nach dem speziellen Einsatz; sie sollte so gering wie möglich gewählt werden, um Kosten zu sparen und die Eigenschaften der Dispersionen, insbesondere ihre Umweltverträglichkeit, so wenig wie möglich negativ zu beeinflussen.

Nachstehend soll die Erfindung anhand von Ausführungsbeispielen und Vergleichsbeispielen näher erläutert werden.

Die nachstehend eingesetzten Polyethylenglycol- (PEG-) Fettsäureester besaßen eine hydrophile Kette mit zwischen 20 und 30 PEG-Einheiten. Die Fettsäurekette besaß eine Kettenlänge von 18 Kohlenstoffatomen (Abkömmling der Stearinsäure). Der Glycerin-Fettsäureester war Glycerin-monostearat.

Alle Dispersionen wurden wie folgt hergestellt: Das Paraffin wird zusammen mit den Tensiden aufgeschmolzen und bei 60-70°C ins Wasser gegeben. Die Mischung wird dann mit Hilfe einer Emulgiermaschine (Stabmischer für kleine Proben oder Rotor-Stator Dispergieranlagen für größere Mengen) für 10 min bei 6000-20000 Umdrehungen/min dispergiert. Die Stabilisierung erfolgt durch Benetzung der Paraffintröpfchen mit den sterisch abstoßenden Tensiden.

### Beispiel 1

Eine Dispersion wurde aus den folgenden Materialien hergestellt:
30 Gew.-% Heptadecan,
67 Gew.-% Wasser,
1 Gew.-% PEG-Fettsäureester,
1 Gew.-% Glycerin-Fettsäureester und
1 Gew.-% Natrium-Stearoylglutamat.

Diese Dispersion wurde für sechzehn Monate gelagert. Die Partikelgrößenverteilung zu Beginn der Lagerung und nach den sechzehn Monaten wurde bestimmt. Das Ergebnis ist in **Figur 2** dargestellt. Man erkennt, dass die Partikelgrößenverteilung annähernd gleich geblieben und keine signifikante Änderung festzustellen ist.

### Beispiel 2 und Vergleichsbeispiele

Folgende Dispersionen wurden hergestellt:
Probe 2a:
   30 Gew.-% Heptadekan,
   68,5 Gew.-% Wasser,
   1,5 Gew.-% Polyoxyethylen-cetylstearylalkohol,
Probe 2b:
   30 Gew.-% Heptadekan,
   68 Gew.-% Wasser,
   1,5 Gew.-% Polyoxyethylen-cetylstearylalkohol und
   0,5 Gew.-% Sorbitantristearat.
Probe 2c:
   30 Gew.-% Heptadekan,
   68 Gew.-% Wasser,
   1,5 Gew.-% PEG-Fettsäureester,
   0,5 Gew.-% Glycerinfettsäureester.
Probe 2d:
   30 Gew.-% Heptadekan,
   68 Gew.-% Wasser,
   1,5 Gew.-% PEG-Fettsäureester,
   0,5 Gew.-% Natriumstearoylglutamat.
Probe 2e:
   30 Gew.-% Heptadekan,
   67,5 Gew.-% Wasser,
   1,5 Gew.-% PEG-Fettsäureester,
   0,5 Gew.-% Natriumstearoylglutamat, und
   0,5 Gew.-% Glycerinfettsäureester.

Die Dispersionen wurden jeweils in eine Flasche gefüllt und für 15 Tage stehen gelassen. Nach den 15 Tagen wurde das Aufrahmverhalten beurteilt. Dafür wurde die Höhe der gesamten Flüssigkeitssäule in der Flasche gemessen und teils nach 5 Tagen, immer aber am Ende der 15 Tage mit dem Auge die Höhe desjenigen Anteils an der Flüssigkeitssäule bestimmt, der nicht mehr als Dispersion, sondern im Wesentlichen als wässrige Phase vorlag.

Die Höhe der wässrigen Phase nach 5 und 15 Tagen lässt sich der nachstehenden Tabelle entnehmen.

| Probe | 2a | 2b | 2c | 2d | 2e |
|---|---|---|---|---|---|
| Höhe der wässrigen Phase nach 5 Tagen (%) | 35 % | 15 % | - | - | 35% |
| Höhe der wässrigen Phase nach 15 Tagen (%) | 50 % | 50% | 10% | 50 % | 10 % |

Daraus lässt sich zweierlei ableiten: Zum ersten ist ein einziges nichtionisches Tensid, das zwar lange hydrophobe Ketten aufweist und sich damit gut in den Paraffintröpfchen verankern lässt, nicht ausreichend, um die Oberfläche dieser Tröpfchen soweit zu besetzen, dass das Aufrahmen verhindert wird. Wird dagegen eine Kombination aus zwei nichtionischen Tensiden verwendet, von denen eines eine lange und eines eine kurze hydrophile Kette aufweist, ist das Aufrahmverhalten wesentlich verbessert. Zum zweiten lässt sich erkennen, dass die in US 2004/0046147 in Beispiel 13 angegebene Kombination aus einem nichtionischen Tensid mit mindestens 20 PEG-Einheiten und Sorbitantristearat als Keimbildner eine Suspension liefert, die nicht ausreichend stabil ist.

### Beispiel 3 und Vergleichsbeispiel

Es wurden zwei Paraffin-in-Wasser-Suspensionen hergestellt. Die erste bestand aus 30 Gew.-% Heptadekan, 1,5 Gew.-% PEG-Fettsäureester sowie 68,5 Gew.-% Wasser. Die zweite enthielt dieselben Komponenten, 68.0 Gew.-% Wasser sowie zusätzlich 0,5 Gew.-% Natriumstearoylglutamat. Das Schmelz- und Erstarrungsverhalten beider Proben wurde mit der dynamischen Differenzkalorimetrie (DSC) untersucht. Die Ergebnisse sind in **Figur 3** dargestellt (die Legende nennt die erste der Suspensionen "P17 30%" und die zweite "P17 30% + Keimbildner"). Man erkennt deutlich die Verringerung des Unterkühlungseffekts von ca. 10 K auf ca. 4 K durch die Zugabe des Natriumstearoylglutamats.

### Beispiel 4

Es wurden vier Paraffin-in-Wasser-Suspensionen hergestellt. Die erste bestand aus 30 Gew.-% Heptadekan, 1,5 Gew.-% PEG-Fettsäureester,sowie 68,5 Gew.-% Wasser.Die anderen drei enthielten zusätzlich 0,1 Gew.-%, 0,25 Gew.-% bzw. 0,5 Gew.-% Natriumstearoylglutamat, dabei dementsprechend nur 68,4 Gew.-%, 68,25 Gew.-% bzw. 68,0 Gew.-% Wasser. Das Verhalten aller vier Proben beim Erstarren wurde differenzkalorimetrisch (mittels DSC) untersucht. Die Ergebnisse sind in **Figur 9** dargestellt. Dabei konnte festgestellt werden, dass der Zusatz des anionischen Keimbilders Natriumstearoylglutamat in einer Menge von nur 0,1 Gew. -% zu einer Verschiebung und gleichzeitig einer Verbreiterung des Schmelzpeaks führt. Eine Erhöhung der Menge auf 0,25 Gew.-% verbessert die Unterdrückung des Unterkühlungseffekts wesentlich; wird die Menge noch weiter erhöht, wird er nicht weiter minimiert.

### Vergleichsbeispiel 5

Es wurden zwei Paraffin-in-Wasser-Suspensionen hergestellt. Die erste bestand aus 30 Gew.-% Heptadekan, 1,5 Gew.-% PEG-Fettsäureester, sowie Wasser bis 100 Gew.-%. Die andere enthielt zusätzlich 0,5 Gew.-% Sodium N-Lauroyl-L-Glutamat (Natrium N-Lauroyl-L-Glutamat) (Amisoft LS11) als Keimbildner, dabei Wasser wiederum bis 100 Gew.-%.

Das Ergebnis der differentialkalorimetrischen Analyse wird in **Figur 10** gezeigt: Der Zusatz des Natrium N-Lauroyl-L-Glutamats hatte keinen Effekt auf das Erstarrungsverhalten der Suspension. Dies zeigt, dass der Einsatz eines anionischen Tensids mit Carboxylatgruppen erforderlich ist, dessen hydrophobe Kette eine Länge von mindestens 14 Kohlenstoffatomen aufweist.

### Beispiel 6 mit Vergleichsbeispiel

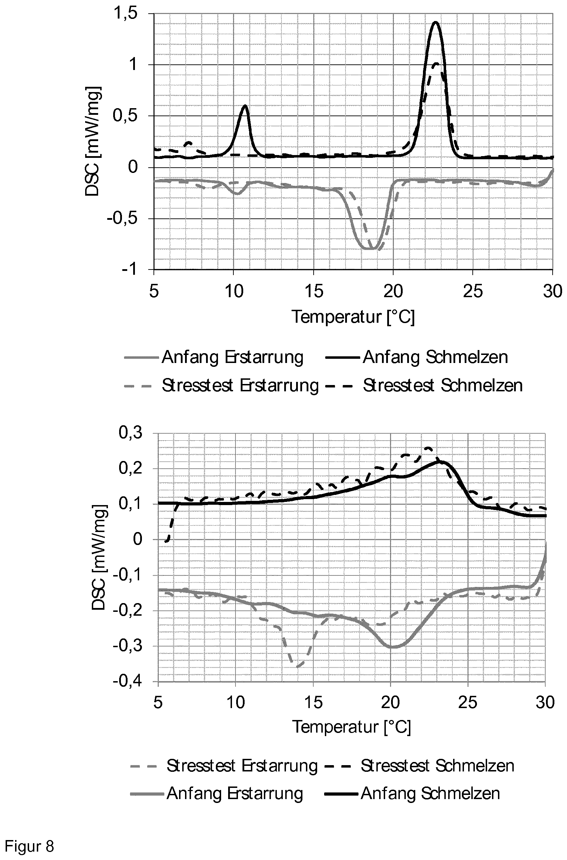

Es wurden zwei Paraffin-in-Wasser-Suspensionen hergestellt. Die erste bestand aus 30 Gew.-% Heptadekan, 67 Gew.-% Wasser, 1 Gew.-% PEG-Fettsäureester, 1 Gew.-% Fettsäureester und 1 Gew.-% Natriumstearoylglutamat. Die andere enthielt anstelle von 30 Gew.-% Heptadekan 30 Gew.-% RT20 (ein Produkt von Rubitherm mit einem Schmelzpunkt bei 20°C) und anstelle von 1 Gew.-% Natriumstearoylglutamat 2,5 Gew.-% RT54. Dieses Material ist eine Paraffinmischung mit einem Schmelzpunkt bei 54°C. Das Schmelz- und Erstarrungsverhalten in beiden Suspensionen wurde mittels DSC untersucht. Sodann wurden die Suspensionen einem Stresstest mit mechanischer Scherung und wiederholtem Phasenwechsel unterworfen und danach nochmals mittels DSC untersucht. Die Ergebnisse sind in **Figur 8** dargestellt (die obere Graphik zeigt das Verhalten der Suspension mit Natriumstearoylglutamat, die untere das Verhalten der Suspension mit der Paraffinmischung als Keimbildner).

Man erkennt, dass sich sowohl das Schmelz- als auch das Erstarrungsverhalten der Natriumstearoylglutamat enthaltenden Suspension durch die Einwirkung des Stresses so gut wie nicht verändert, während der Erstarrungspunkt beim Abkühlen der mit Paraffin als Keimbildungsmittel versetzten Suspension infolge der Stresseinwirkung um ca. 6 K absinkt.

### Beispiele 7 mit Vergleichsbeispielen

Vier verschiedene Paraffin-in-Wasser-Dispersionen mit jeweils unterschiedlichen Paraffinen wurden hergestellt. Als Paraffine wurden Parafol 16 (Hexadecan), Heptadecan, Parafol 18 (Octadecan) und Parafol 22 (Docosan) verwendet. Jede der Dispersionen enthielt 30 Gew.-% Paraffin sowie ein nichtionisches Tensid mit einer langen hydrophilen Kette, nämlich Polyethylenglycol-fettsäureester in einer Menge von 1,5 Gew.-% für die Hexadecan- und Heptadecan-Dispersionen, in einer Menge von 3 Gew.-% für die Ocatdecan-Dispersion und in einer Menge von 5 Gew.-% für die Docosan-Dispersion. Weiterhin enthielt jede der Dispersionen Wasser bis 100 Gew. Die Dispersionen wurden in vier Teile geteilt. Einer dieser Teile blieb unverändert, und die anderen wurden mit jeweils unterschiedlichen Keimbildnern versetzt, und zwar jeweils in einer Menge von 0,5 Gew.-%, bezogen auf die Gesamtmasse (hierfür wurde die Wassermenge jeweils entsprechend reduziert). Als Keimbildner wurden verwendet: Sorbitanfettsäureester Span 65, Saccharosefettsäureester Sisterna A 10E-C und Natriumstearoylglutamat.

Das Erstarrungsverhalten des Paraffins in allen 16 Dispersionen wurde mittels DSC untersucht. Die Ergebnisse sind in den **Figuren 4 bis 7** dargestellt, wobei SP65 für den Sorbitanfettsäureester steht, SAE10C für den Saccharosefettsäureester und SG für Natriumstearylglutamat. Die Verminderung des Unterkühlungseffekts, der sich an den keimbildnerfreien Dispersionen ablesen lässt, ist bei der Verwendung von Paraffinen mit kürzerer Kette bei Einsatz des Natriumstearylglutamats am stärksten, während die beiden Materialien Sorbitanfettsäureester und Saccharosefettsäureester eine Aufspaltung in zwei Erstarrungspeaks oder sogar einen breiten Erstarrungsbereich zeigen. Mit zunehmender Kettenlänge des Paraffins wird das Erstarrungsverhalten komplexer. Sowohl SP 65 als auch SAE 10C zeigen in den entsprechenden Dispersionen fast keine Wirksamkeit mehr, während der Einsatz von Natriumstearylglutamat auch in diesen Fällen dazu führt, das der Hauptbestandteil des Paraffins bei einer deutlich höheren Temperatur erstarrt.

## Patentansprüche

1. Paraffin-in-Wasser-Dispersion, umfassend
- Wasser,
- einen langkettigen Kohlenwasserstoff oder ein Gemisch mehrerer langkettiger Kohlenwasserstoffe,
- mindestens ein erstes Tensid, das einen hydrophilen Rest mit einer Kettenlänge von mindestens 40 Atomen aufweist,
- mindestens ein zweites Tensid, das einen hydrophilen Rest mit einer Kettenlänge von höchstens 20 Atomen aufweist, wobei
- jedes der in der Dispersion vorhandenen Tenside eine langkettige hydrophobe Gruppe mit mindestens 14 Kohlenstoffatomen in der Kette aufweist, mit denen es in den Paraffintröpfchen verankert ist, und wobei
- mindestens eines der genannten Tenside ein nichtionisches Tensid ist und
- mindestens eines der genannten Tenside ein anionisches Tensid ist, das mindestens eine Carboxylatgruppe trägt.

2. Paraffin-in-Wasser-Dispersion nach Anspruch 1, wobei das erste Tensid, das einen hydrophilen Rest mit einer Kettenlänge von mindestens 40 aufweist, einen HLB-Wert von mindestens 8 besitzt und/oder eine Kettenlänge von mindestens 60, bevorzugt mindestens 80 Atomen aufweist.

3. Paraffin-in-Wasser-Dispersion nach Anspruch 1 oder 2, worin die langkettige hydrophobe Gruppe mit mindestens 14 Kohlenstoffatomen eine Alkylgruppe und bevorzugt eine Stearylgruppe ist.

4. Paraffin-in-Wasser-Dispersion nach einem der voranstehenden Ansprüche, worin das anionische Tensid, das mindestens eine Carboxylatgruppe trägt, einen HLB-Wert von mindestens 8, vorzugsweise von mindestens 12 und ganz besonders bevorzugt von mindestens 18 aufweist und/oder worin der hydrophile Rest dieses Tensids eine Kettenlänge von höchstens 10 Kohlenstoffatomen aufweist.

5. Paraffin-in-Wasser-Dispersion nach einem der voranstehenden Ansprüche, worin das anionische Tensid, das mindestens eine Carboxylatgruppe trägt, einen Schmelzpunkt aufweist, der mindestens 20 K über dem des eingesetzten langkettigen Kohlenwasserstoffs bzw. Kohlenwasserstoffgemischs liegt.

6. Paraffin-in-Wasser-Dispersion nach einem der voranstehenden Ansprüche, worin das anionische Tensid, das mindestens eine Carboxylatgruppe trägt, in seinem hydrophilen Rest mindestens eine weitere hydrophile, neutrale oder anionische Gruppe trägt.

7. Paraffin-in-Wasser-Dispersion nach Anspruch 6, worin die mindestens eine weitere hydrophile, neutrale oder anionische Gruppe ausgewählt ist unter Aminogruppen, Hydroxygruppen, Thiogruppen und Carboxylatgruppen.

8. Paraffin-in-Wasser-Dispersion nach Anspruch 7, worin das anionische Tensid, das mindestens eine Carboxylatgruppe trägt, ausgewählt ist unter den Mono-Natrium- und Kaliumsalzen von Dicarbonsäure-monofettestern, den Natrium- und Kalium-Salzen von mit Fettsäuren veresterten Hydroxycarbonsäuren sowie den Mono-Natrium und Kaliumsalzen von Fettsäureamiden, deren Amino-Komponente eine Aminosäure mit ein oder zwei Säuregruppen oder mit einer Säure- und einer zweiten Aminogruppe oder mit einer Säure- und einer Hydroxygruppe ist.

9. Paraffin-in-Wasser-Dispersion nach Anspruch 8, worin das anionische Tensid, das mindestens eine Carboxylatgruppe trägt, ausgewählt ist unter Natriumstearoyllactat und Natriumstearoylglutamat.

10. Paraffin-in-Wasser-Dispersion nach einem der voranstehenden Ansprüche, umfassend weiterhin ein drittes, nichtionisches Tensid, das einen hydrophilen Rest mit einer Kettenlänge von unter 20 Kohlenstoffatomen aufweist.

11. Paraffin-in-Wasser-Dispersion nach Anspruch 10, worin das dritte, nichtionische Tensid ausgewählt ist unter Tensiden, die mindestens eine hydrophile Gruppe aufweisen, ausgewählt unter Aminogruppen, Thiogruppen und Hydroxygruppen und/oder worin dieses Tensid einen HLB-Wert von <6 besitzt.

12. Paraffin-in-Wasser-Dispersion nach einem der Ansprüche 10 und 11, worin das dritte, nichtionische Tensid einen HLB-Wert von <6 besitzt und das zweite Tensid, das einen hydrophilen Rest mit einer Kettenlänge von höchstens 20 Atomen aufweist, einen HLB-Wert von >8, vorzugsweise von >12 und besonders bevorzugt von >16 besitzt.

13. Paraffin-in-Wasser-Dispersion nach einem der Ansprüche 10 bis 12, bestehend aus
- einem Kohlenwasserstoff oder eine Kohlenwasserstoffmischung mit einer Kettenlänge von durchschnittlich zwischen 16 und 22 Kohlenstoffatomen,
- einem ersten Tensid, ausgewählt unter Polyethylenglycolfettsäureestern mit 20 bis 30 Polyethylenglycoleinheiten,
- einem zweiten Tensid, ausgewählt unter Natriumstearoyllactat und Natriumstearoylglutamat,
- optional einem dritten Tensid, das einen HLB-Wert von <6 besitzt und vorzugsweise mindestens eine hydrophile Gruppen aufweist, ausgewählt unter Aminogruppen, Thiogruppen und Hydroxygruppen, und
- Wasser.

14. Paraffin-in-Wasser-Dispersion nach einem der voranstehenden Ansprüche, worin
- die Menge des mindestens einen ersten Tensids oder aller Tenside, das/die einen hydrophilen Rest mit einer Kettenlänge von mindestens 40 Atomen aufweist/aufweisen, 0,5 bis 10 Gew.-% der Dispersion beträgt, und
- die Menge aller Tenside, die einen hydrophilen Rest mit einer Kettenlänge von höchstens 20 Atomen aufweisen, 0,25 bis 5 Gew.-% der Dispersion beträgt.

15. Verfahren zum Herstellen Paraffin-in-Wasser-Dispersion nach einem der voranstehenden Ansprüche, umfassend die Schritte
- Erwärmen, ggf. unter Aufschmelzen, des oder der Kohlenwasserstoffe zusammen mit allen Tensiden, unter Ausbildung einer Mischung,
- Hinzufügen dieser Mischung zu der einzusetzenden Menge an Wasser bei vorzugsweise 50-80°C,
- Dispergieren der Mischung mit Hilfe einer Emulgiermaschine bei 4000-30000 Umdrehungen/min.

## Claims

1. A paraffin-in-water dispersion, comprising
- water,
- a long-chain hydrocarbon or a mixture of several long-chain hydrocarbons,
- at least a first surfactant having a hydrophilic radical having a chain length of at least 40 atoms,
- at least one second surfactant having a hydrophilic radical having a chain length of at most 20 atoms, wherein
- each of the surfactants present in the dispersion has a long-chain hydrophobic group having at least 14 carbon atoms in the chain, with which it is anchored in the paraffin droplets, and wherein
- at least one of said surfactants is a non-ionic surfactant, and
- at least one of said surfactants is an anionic surfactant having at least one carboxylate group.

2. The paraffin-in-water dispersion of claim 1, wherein the first surfactant having a hydrophilic moiety having a chain length of at least 40 has an HLB value of at least 8 and/or a chain length of at least 60, preferably at least 80 atoms.

3. The paraffin-in-water dispersion according to claim 1 or 2, wherein the long-chain hydrophobic group having at least 14 carbon atoms is an alkyl group, and preferably a stearyl group.

4. The paraffin-in-water dispersion according to any one of the preceding claims, wherein the anionic surfactant having at least one carboxylate group has an HLB value of at least 8, preferably of at least 12 and more preferably of at least 18 and/or wherein the hydrophilic moiety of the surfactant has a chain length of at most 10 carbon atoms.

5. The paraffin-in-water dispersion according to any one of the preceding claims, wherein the anionic surfactant having at least one carboxylate group has a melting point at least 20 K above that of the long-chain hydrocarbon or hydrocarbon mixture, respectively.

6. The paraffin-in-water dispersion according to one of the preceding claims, in which the anionic surfactant having at least one carboxylate group has in its hydrophilic moiety at least one further hydrophilic, neutral or anionic group.

7. The paraffin-in-water dispersion according to claim 6, wherein the at least one further hydrophilic, neutral or anionic group is selected from amino groups, hydroxy groups, thiol groups and carboxylate groups.

8. The paraffin-in-water dispersion according to claim 7, wherein the anionic surfactant having at least one carboxylate group is selected from the mono-sodium and potassium salts of dicarboxylic acid monofatty esters, the sodium and potassium salts of fatty acid esterified hydroxycarboxylic acids, and the mono-sodium and potassium salts of fatty acid amides whose amino component is an amino acid having one or two acid groups or with an acid and a second amino group or with an acid and a hydroxy group.

9. The paraffin-in-water dispersion according to claim 8, wherein the anionic surfactant having at least one carboxylate group is selected from sodium stearoyl lactate and sodium stearoyl glutamate.

10. The paraffin-in-water dispersion according to any one of the preceding claims further comprising a third non-ionic surfactant having a hydrophilic moiety having a chain length of less than 20 carbon atoms.

11. The paraffin-in-water dispersion according to claim 10, wherein the third non-ionic surfactant is selected from surfactants having at least one hydrophilic group selected from amino groups, thiol groups and hydroxy groups and/or wherein said surfactant has an HLB value of <6.

12. The paraffin-in-water dispersion according to any one of claims 10 and 11, wherein the third non-ionic surfactant has an HLB value of <6 and the second surfactant having a hydrophilic moiety of a chain length of at most 20 atoms has an HLB value of >8, preferably >12 and more preferably >16.

13. The paraffin-in-water dispersion according to any one of claims 10 to 12, comprising
- a hydrocarbon or a hydrocarbon mixture having a chain length of an average between 16 and 22 carbon atoms,
- a first surfactant selected from polyethylene glycol fatty acid esters having from 20 to 30 polyethylene glycol units,
- one second surfactant selected from sodium stearoyl lactate and sodium stearoyl glutamate,
- optionally a third surfactant having an HLB value of <6 and preferably having at least one hydrophilic group selected from amino groups, thiol groups and hydroxy groups, and
- water.

14. The paraffin-in-water dispersion according to any one of the preceding claims, wherein
- the amount of the at least one first surfactant or of all surfactants having a hydrophilic moiety having a chain length of at least 40 atoms is 0.5 to 10 wt.-% of the dispersion, and
- the amount of all surfactants having a hydrophilic radical having a chain length of at most 20 atoms is 0.25 to 5 wt.-% of the dispersion.

15. A process for preparing paraffin-in-water dispersion according to any one of the preceding claims, comprising the steps
- heating, optionally with melting, of the hydrocarbon(s) together with all surfactants to form a mixture,
- adding this mixture to the amount of water to be used at preferably 50-80°C,
- dispersing the mixture using an emulsifying machine at 4000-30000 revolutions/min.

## Revendications

1. Dispersion de paraffine dans l'eau, comprenant
- de l'eau,
- un hydrocarbure à chaîne longue ou un mélange de plusieurs hydrocarbures à chaîne longue,
- au moins un premier agent tensioactif, qui présente un radical hydrophile ayant une longueur de chaîne de 40 atomes au moins,
- au moins un deuxième agent tensioactif, qui présente un radical hydrophile ayant une longueur de chaîne de 20 atomes au plus,
dans laquelle
- chacun des agents tensioactifs présents dans la dispersion présente un groupe hydrophobe à chaîne longue qui contient au moins 14 atomes de carbone dans la chaîne, par le biais desquels il est ancré aux gouttelettes de paraffine,
et dans laquelle
- au moins un desdits agents tensioactifs est un agent tensioactif non ionique, et
- au moins un desdits agents tensioactifs est un agent tensioactif anionique, qui porte au moins un groupe carboxylate.

2. Dispersion de paraffine dans l'eau selon la revendication 1, dans laquelle le premier agent tensioactif, qui présente un radical hydrophile ayant une longueur de chaîne de 40 atomes au moins, possède une valeur HLB d'au moins 8 et/ou présente une longueur de chaîne d'au moins 60, de préférence d'au moins 80 atomes.

3. Dispersion de paraffine dans l'eau selon la revendication 1 ou 2, dans laquelle le groupe hydrophobe à chaîne longue ayant au moins 14 atomes de carbone est un groupe alkyle et de préférence un groupe stéaryle.

4. Dispersion de paraffine dans l'eau selon l'une quelconque des revendications précédentes, dans laquelle l'agent tensioactif anionique, qui porte au moins un groupe carboxylate, présente une valeur HLB d'au moins 8, de préférence d'au moins 12 et de préférence encore d'au moins 18 et/ou dans laquelle le radical hydrophile de cet agent tensioactif présente une longueur de chaîne de 10 atomes de carbone au plus.

5. Dispersion de paraffine dans l'eau selon l'une quelconque des revendications précédentes, dans laquelle l'agent tensioactif anionique, qui porte au moins un groupe carboxylate, présente un point de fusion qui est situé au moins 20 K au-dessus de celui de l'hydrocarbure à chaîne longue ou du mélange d'hydrocarbures à chaîne longue utilisé.

6. Dispersion de paraffine dans l'eau selon l'une quelconque des revendications précédentes, dans laquelle l'agent tensioactif anionique, qui porte au moins un groupe carboxylate, porte dans son radical hydrophile au moins un autre groupe hydrophile, neutre ou anionique.

7. Dispersion de paraffine dans l'eau selon la revendication 6, dans laquelle ledit au moins un autre groupe hydrophile, neutre ou anionique est choisi parmi des groupes aminés, des groupes hydroxy, des groupes thio et des groupes carboxylate.

8. Dispersion de paraffine dans l'eau selon la revendication 7, dans laquelle l'agent tensioactif anionique, qui porte au moins un groupe carboxylate, est choisi parmi les sels de monosodium- et potassium de mono-esters gras de l'acide dicarboxylique, les sels de sodium- et potassium d'acides hydroxycarboxyliques estérifiés avec des acides gras ainsi que les sels de monosodium- et potassium d'amides d'acides gras, dont le composant aminé est un acide aminé avec un ou deux groupe(s) acide(s) ou avec un groupe acide et un deuxième groupe aminé ou avec un groupe acide et un groupe hydroxy.

9. Dispersion de paraffine dans l'eau selon la revendication 8, dans laquelle l'agent tensioactif anionique, qui porte au moins un groupe carboxylate, est choisi parmi le stéaroyllactate de sodium et le stéaroylglutamate de sodium.

10. Dispersion de paraffine dans l'eau selon l'une quelconque des revendications précédentes, comprenant en outre un troisième agent tensioactif non ionique, qui présente un radical hydrophile ayant une longueur de chaîne de moins de 20 atomes de carbone.

11. Dispersion de paraffine dans l'eau selon la revendication 10, dans laquelle le troisième agent tensioactif non ionique est choisi parmi des agents tensioactifs, qui présentent au moins un groupe hydrophile, choisi parmi des groupes aminés, des groupes thio et des groupes hydroxy, et/ou dans laquelle cet agent tensioactif possède une valeur HLB de < 6.

12. Dispersion de paraffine dans l'eau selon une des revendications 10 et 11, dans laquelle le troisième agent tensioactif non ionique possède une valeur HLB de < 6 et le deuxième agent tensioactif, qui présente un radical hydrophile ayant une longueur de chaîne de 20 atomes au plus, possède une valeur HLB de > 8, de préférence de > 12, et de préférence encore de > 16.

13. Dispersion de paraffine dans l'eau selon l'une quelconque des revendications 10 à 12, se composant de
- un hydrocarbure ou un mélange d'hydrocarbures ayant une longueur de chaîne comprise en moyenne entre 16 et 22 atomes de carbone,
- un premier agent tensioactif, choisi parmi des esters d'acide gras de polyéthylène glycol avec 20 à 30 unités de polyéthylène glycol,
- un deuxième agent tensioactif, choisi parmi le stéaroyllactate de sodium et le stéaroylglutamate de sodium,
- en option un troisième agent tensioactif, qui possède une valeur HLB de < 6 et qui présente de préférence au moins un groupe hydrophile, choisi parmi des groupes aminés, des groupes thio et des groupes hydroxy, et
- de l'eau.

14. Dispersion de paraffine dans l'eau selon l'une quelconque des revendications précédentes, dans laquelle
- la quantité dudit au moins un premier agent tensioactif ou de tous les agents tensioactifs, qui présente(nt) un radical hydrophile ayant une longueur de chaîne de 40 atomes au moins, vaut 0,5 à 10 % en poids de la dispersion, et
- la quantité de tous les agents tensioactifs, qui présentent un radical hydrophile ayant une longueur de chaîne de 20 atomes au plus, vaut 0,25 à 5 % en poids de la dispersion.

15. Procédé de fabrication d'une dispersion de paraffine dans l'eau selon l'une quelconque des revendications précédentes, comprenant les opérations suivantes:
- chauffer, éventuellement jusqu'à fondre, le ou les hydrocarbure(s) en même temps que tous les agents tensioactifs, avec formation d'un mélange,
- ajouter ce mélange à la quantité d'eau à utiliser de préférence à 50 - 80°C,
- disperser le mélange à l'aide d'une machine à émulsionner à 4000 - 30000 tours/minute.
